# EUROPEAN PATENT APPLICATION

(11) **EP 4 686 775 A1**
(43) Date of publication of application: **04.02.2026**
(21) Application number: 25191075.8
(22) Date of filing: 22.07.2025
(51) Int. Cl.: C25B 1/042, C25B 1/23, C25B 15/08, C10G 2/00, C01B 39/00

(54) **SYSTEMS AND METHODS FOR SYNGAS PRODUCTION AND UPGRADING**

(30) Priority: 30.07.2024 US 202418789202
(71) Applicant: Aerospace Carbon Solutions LLC, Cincinnati, Ohio 45215-1915 (US)
(72) Inventor: LIU, Mingfei, Cincinnati, 45215-1915 (US); DALLY, Brice Nathaniel, Cincinnati, 45215-1915 (US)
(74) Representative: Openshaw & Co.

(57) **Abstract**

Systems and methods for syngas production are described herein. In some approaches, the system (100) comprises a solid oxide electrolyzer (102) and a syngas upgrading unit (104). The solid oxide electrolyzer (102) comprises a first and a second electrode (114) (116). The first electrode (114) receives a first feedstock (106A) comprising steam. The second electrode (116) receives a second feedstock (108A) comprising a hydrocarbon species. A control unit (160) is in communication with the solid oxide electrolyzer (102). The control unit (160) may be configured to adjust an amount of the first product stream (110A) blended with the second product stream (112A) to adjust the syngas composition. In some embodiments, the system (100) comprises a heat integration system (122) transfers heat from the syngas upgrading unit (104) to the solid oxide electrolyzer (102). In some embodiments, the system (100) comprises a recycle line (124) that recycles tail gas from the syngas upgrading unit (104) to the second feedstock (108A). The control unit (160) may control an amount of heat transferred and/or tail gas recycled.

## Description

### TECHNICAL FIELD

These teachings relate generally to systems and methods for manufacturing syngas.

### BACKGROUND

Chemical manufacturing commonly involves energy-intensive and/or resource-intensive processes, which may contribute to energy consumption and greenhouse gas emissions. For example, traditional approaches for synthesis gas ("syngas") production rely on chemical approaches such as coal gasification or steam reforming of natural gas to produce syngas. Such traditional approaches to syngas production are often energy-intensive and can emit large amounts of greenhouse gases (GHGs). In addition, coal gasification and steam reforming often involve high capital expenditures for equipment and installation. Additionally, once coal gasification and/or steam reforming equipment is installed, the equipment may not easily be resized to accommodate changes in production volume. Thus, approaches for energy efficient and scalable syngas production and upgrading with reduced emissions may be desirable.

### BRIEF DESCRIPTION OF DRAWINGS

Various needs are at least partially met through provision of the systems and methods for syngas production and upgrading described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic diagram of system for syngas production and upgrading, in accordance with various embodiments;
FIG. 2 is a schematic diagram of the solid oxide electrolyzer (SOE) system of FIG. 1, showing the electrochemical reactions occurring therein;
FIG. 3 is a schematic diagram of a system for producing and upgrading syngas, in accordance with some embodiments; and
FIG. 4 is a process flow diagram of a method for syngas production and upgrading, in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The systems and methods for syngas production described herein convert feedstocks containing light hydrocarbon species into syngas using a solid oxide electrolyzer (SOE) which uses electrochemical reactions. The approaches described herein convert light hydrocarbon feedstocks such as biogas, industrial waste gas, natural gas, flare gas, and refining tail gas to syngas using an SOE. The light hydrocarbon feedstock is fed to the SOE anode and a water feedstock is fed to the SOE cathode. When electricity is provided to the SOE, the water is electrolyzed to hydrogen (H₂) and oxygen ions (O²⁻). The hydrogen (H₂) can be used directly as a fuel, as an input for chemical processes such as ammonia synthesis, and/or as an input for fuel refining processes such as sustainable aviation fuel (SAF) refining. The oxygen ions (O²⁻) are transported to the SOE anode to partially oxidize the light hydrocarbon feedstock to form syngas.

Syngas is then converted in a downstream process to at least one secondary chemical via a syngas upgrading process. The syngas, which is a combination of carbon monoxide and hydrogen, is upgraded or converted into a valuable chemical or fuel. The syngas upgrading process may include at least one of a methanol synthesis, a Fischer-Tropsch (FT) process, an alcohol synthesis, a fermentation, or an electrochemical synthesis process. For example, syngas may be upgraded downstream of the solid oxide electrolyzer via methanol synthesis. In another example, the syngas is upgraded downstream in a Fischer-Tropsch synthesis processes to produce hydrocarbons of various molecular weights.

Due to the use of a hydrocarbon feedstock, the approaches for syngas production described herein may achieve a high energy efficiency, resulting in reducing energy consumption by the solid oxide electrolyzer. Oxygen from the water electrolysis in the solid oxide electrolyzer is consumed by the hydrocarbon feedstock, which reduces the potential across the solid oxide electrolyzer. As a result, at a given voltage, the solid oxide electrolyzer can deliver a higher current density. Delivering a higher current density may result in increased conversion of the feedstocks to syngas and hydrogen and may also improve efficiency, decreasing operating costs. For example, a smaller number of solid oxide electrolyzer cells may be required to produce a given output in the electrolyzer product streams.

Advantageously, the systems and methods described herein involve the integrated operation of a syngas upgrading process in conjunction with syngas production at the solid oxide electrolyzer. For example, the methods and systems for syngas production described herein leverage heat and/or tail gas from a downstream syngas upgrading process in the solid oxide electrolyzer to improve efficiency and/or conversion of syngas production. Supplying heat to the solid oxide electrolyzer from a downstream syngas upgrading process may result in improved energy efficiency, which translates to producing more syngas (CO + H₂) and/or hydrogen (H₂) per unit of electricity input to the electrolyzer.

Transferring heat from the syngas upgrading process to the solid oxide electrolyzer may reduce the electricity consumption of the solid oxide electrolyzer operation. Reducing the electricity consumption of the solid oxide electrolyzer may further improve the efficiency of operating the solid oxide electrolyzer.

Further, tail gas from the syngas upgrading process may include unconverted hydrocarbons from the hydrocarbon feedstock being fed to the solid oxide electrolyzer. The tail gas from the syngas upgrading process may also include less valuable, light hydrocarbons produced as a byproduct of the syngas upgrading process. Thus, recycling tail gas from a syngas upgrading unit that is downstream of the solid oxide electrolyzer into a feedstock stream of the solid oxide electrolyzer may increase hydrocarbon conversion rates and also increase the process yield.

In addition to leveraging renewable or non-fossil fuel-based hydrocarbon feedstocks for syngas production, the methods and systems for syngas production and upgrading described herein can use renewable electricity sources, such as solar power or wind power, to further reduce emissions. In some aspects, the particular hydrocarbon feedstocks and energy sources used herein may result in reduced carbon dioxide (CO₂) emissions from the syngas production process. In addition to reduced carbon dioxide (CO₂) emissions, there may be zero NOx emissions from the syngas production processes described herein. By contrast, traditional syngas production processes involving coal gasification or steam reforming may result in NOx formation.

As used herein, syngas refers to synthesis gas and comprises a mixture of carbon monoxide (CO) and hydrogen (H₂).

As used herein, a light hydrocarbon species refers to a hydrocarbon having a carbon number in the range of about C1 to about C7.

As used herein, renewable electricity sources refer to naturally replenishing energy sources that are not depleted. In some examples, renewable electricity sources may refer to locally supplied power sources that are not supplied by a general power grid. Examples of renewable electricity sources include sources include but are not limited to wind, solar, geothermal, hydropower, nuclear, and bioenergy electricity sources. Renewable electricity sources can include electricity sources that have a low- or zero-carbon footprint. An electricity source with a low-carbon footprint may refer to an electricity source with a carbon footprint that is lower as compared to a carbon footprint of a fossil-based electricity source. An electricity source with a zero-carbon footprint may refer to an electricity source with no net carbon footprint.

As used herein, grid-based electricity refers to electricity from a power grid that delivers electricity from power plants.

As used herein, a non-fossil fuel-based feedstock refers to feedstocks that do not include and/or are not derived from coal, oil, or natural gas.

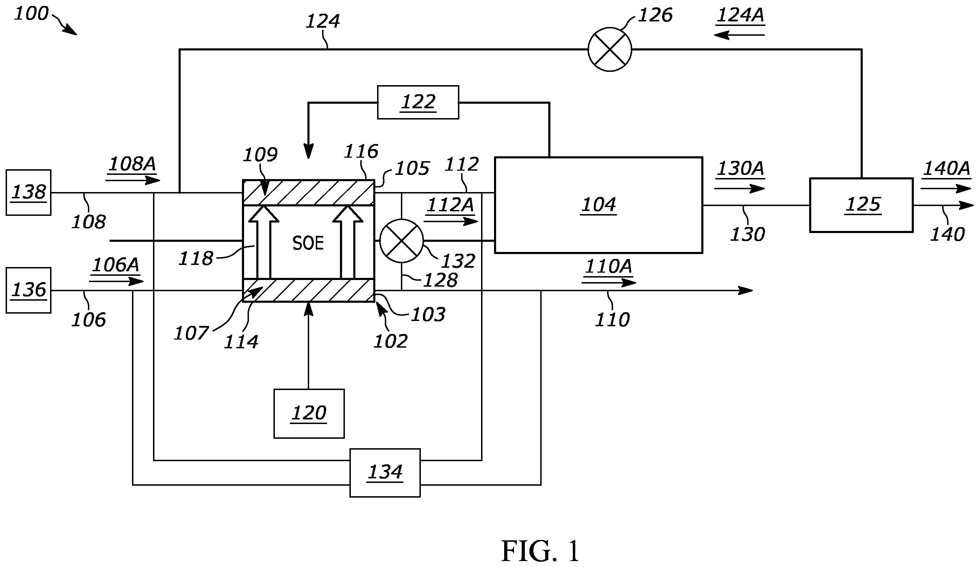

Turning now to the figures, FIG. 1 shows a system 100 for syngas production and upgrading. In some aspects, the system 100 may be used to convert a sustainable hydrocarbon feedstock to syngas. A downstream process is then used to upgrade the syngas to at least one secondary chemical. The secondary chemical may be any fuel and/or chemical that is derived from syngas. The system 100 includes a solid oxide electrolyzer 102 and a syngas upgrading unit 104.

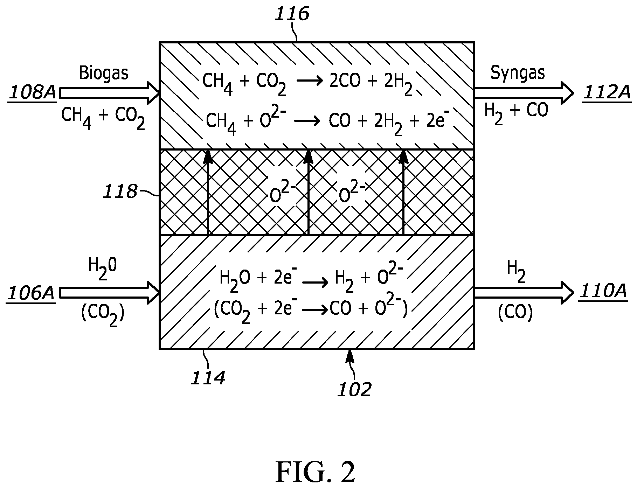

The solid oxide electrolyzer 102 is configured to convert a first feedstock 106A and a second feedstock 108A into a first product stream 110A and a second product stream 112A. FIG. 2 illustrates the exemplary reactions that can occur within the solid oxide electrolyzer 102 to convert the first and second feedstocks 106A, 108A to the first and second product streams 110A, 112A.

The solid oxide electrolyzer 102 comprises a first electrode 114, a second electrode 116, and an electrolyte 118. The first electrode 114 is disposed on a first side 103 of the electrolyte 118. The second electrode 116 is disposed on a second side 105 of the electrolyte 118. For example, the solid oxide electrolyzer 102 may have the first electrode 114 and the second electrode 116 disposed on opposite sides of the electrolyte 118. In some configurations, the solid oxide electrolyzer 102 includes a first electrode compartment 107 disposed on the first side 103 of the electrolyte 118 and a second electrode compartment 109 disposed on the second side 105 of the electrolyte 118. At least a portion of the first electrode 114 may be disposed in the first electrode compartment 107. At least a portion of the second electrode 116 may be disposed in the second electrode compartment 109.

The first electrode 114 may be composed of a mixed ionic-electronic conductor. In some configurations, the first electrode 114 is a cathode.

The second electrode 116 may also be composed of a mixed ionic-electronic conductor. In some configurations, the second electrode 116 is an anode.

In some embodiments, the second electrode 116 comprises a catalyst to promote partial oxidation of the light hydrocarbon species to form syngas (CO + H₂). Examples of suitable catalysts include catalysts that include at least one of nickel (Ni), copper (Cu), iron (Fe), cobalt (Co), platinum (Pt), rhodium (Rh) or ruthenium (Ru). The catalyst can be applied during fabrication of the second electrode 116 or after. In some examples, the catalyst can be deposited directly onto the surface of the second electrode 116 or can be mixed with a support material to form a composite layer on a surface of the second electrode 116. In some examples, the catalyst can be embedded into the second electrode 116.

In some embodiments, the mixed ionic-electronic conductor of the first electrode 114 and/or the second electrode 116 is composed of a composite phase that includes a metal phase and a ceramic phase. In some examples, the metal phase of the composite phase includes at least one of nickel (Ni), copper (Cu), iron (Fe), or cobalt (Co). In some examples, the ceramic phase of the composite phase includes at least one of yttria stabilized zirconia (YSZ), samarium-doped cera oxide (SDC), gadolinium-doped ceria oxide (GDC), doped bismuth oxide, doped orthorhombic perovskite (LaGaO₃), doped barium cerate-zirconate (Ba(Zr, Ce, M)O₃), where M is at least one of yttrium (Y), gadolinium (Gd), samarium (Sm), erbium (Er), scandium (Sc), ytterbium (Yb), etc. In some embodiments, the second electrode 116 is composed of a single phase. The single phase can be composed of a material having the formula ABO₃, where A is selected from at least one of lanthanides, magnesium (Mg), calcium (Ca), strontium (Sr), barium (Ba), or lanthanum (La), and element B is selected from at least one of nickel (Ni), cobalt (Co), iron (Fe), manganese (Mn), and chromium (Cr).

In some embodiments, the first electrode 114 is composed of a different material than the second electrode 116. In other embodiments, the first electrode 114 is composed of the same material as the second electrode 116.

The electrolyte 118 is an ion-conducting electrolyte. It is contemplated that the solid oxide electrolyzer 102 can include any suitable ion-conducting electrolyte. Examples of suitable ion-conducting electrolytes include yttria stabilized zirconia (YSZ), samarium-doped cerium oxide (SDC), gadolinium-doped cerium oxide (GDC), doped bismuth oxide, and doped orthorhombic perovskite (LaGaO₃).

The solid oxide electrolyzer 102 is coupled to an electricity source 120. The electricity source 120 can be grid-based electricity, a renewable electricity source, or combinations thereof. By using renewable electricity sources to operate the solid oxide electrolyzer 102, the system 100 may achieve reduced emissions as compared to operations that use only grid-based electricity and, in some aspects, may achieve near-zero greenhouse gas emissions.

The solid oxide electrolyzer 102 may operate at temperatures of between about 500 degrees Celsius and about 900 degrees Celsius. In some embodiments, a heat exchanger 134 may be disposed downstream of the solid oxide electrolyzer 102 and upstream of the syngas upgrading unit 104. The heat exchanger 134 may capture energy from the first product stream 110A and/or the second product stream 112A and may use the captured heat energy to heat the first feedstock 106A and/or the second feedstock 108A. Using heat from products of the solid oxide electrolyzer 102 in this manner may reduce the energy demand for feedstock preheating, which may also reduce electricity consumption and improve energy efficiency of the solid oxide electrolyzer 102 operation. In some embodiments, the solid oxide electrolyzer 102 and/or the first and second feedstocks 106A, 108A can be heated via a downstream process, for example using heat energy from the syngas upgrading unit 104, or from another process as a way of capturing and utilizing waste heat to improve efficiency of the solid oxide electrolyzer 102.

The first feedstock 106A is fed to the first electrode 114. The first feedstock 106A comprises steam (H₂O). In some embodiments, the first feedstock further comprises carbon dioxide (CO₂). The carbon dioxide (CO₂) may be sourced, for example, from a direct air capture system or a point-source capture for co-electrolysis with water. Carbon dioxide (CO₂) produces carbon monoxide (CO) in the first product stream 110A and forms oxygen ions (O²⁻) that are transferred to the second electrode 116 via the electrolyte 118 during operation of the solid oxide electrolyzer 102. Oxygen ions (O²⁻) present in the second electrode 116 partially oxidize the light hydrocarbon species that is fed to the second electrode 116 in the second feedstock 108A to form syngas. The consumption of oxygen ions (O²⁻) by the light hydrocarbon species in the second electrode 116 reduces potential across the solid oxide electrolyzer 102 so that the solid oxide electrolyzer 102 can deliver a higher current density at a given operating voltage. The production of hydrogen or syngas has a linear relationship with current density. Accordingly, higher current density can result in a higher production rate and a higher system capacity, which can reduce the cost per unit of the solid oxide electrolyzer 102. A higher current density may lower capital costs by allowing a given amount of syngas to be produced with fewer solid oxide electrolyzer cells. In addition, consuming oxygen ions (O²⁻) in the second electrode 116 (e.g., the anode) may improve the durability and/or lifetime of the solid oxide electrolyzer 102. Oxygen formation in the second electrode 116 (e.g., the anode) may be detrimental to the solid oxide electrolyzer 102 so removal and reduction of the oxygen by consumption in the second electrode 116 may improve the durability of the solid oxide electrolyzer 102. Oxygen consumption in the second electrode 116 is shown, for example, in FIG. 2.

In some embodiments, the first feedstock 106A is supplied by a first supply line 106 coupled to a first feedstock supply 136. The first feedstock supply 136 may be any suitable water source. In some examples, the first feedstock supply 136 is coupled to a heating unit that is configured to supply heat energy to the first feedstock to convert the first feedstock from a liquid form to a gaseous form. The heating unit may be a steam generator or vaporizer. The steam generator or vaporizer can be electrically heated or, in some aspects, may use heat from a heat exchanger. The heat exchanger may transfer excess heat from another process to vaporize the first feedstock 106A (e.g., water to steam). The steam generator or vaporizer can utilize heat from exhaust product from the solid oxide electrolyzer 102. In some approaches, the steam generator or vaporizer can also utilize heat from the syngas upgrading unit 104. In some approaches, the first supply line 106 may include a pump that is used to pass the first feedstock 106A (e.g., water) through a purification system to remove contaminants that could be harmful to the solid oxide electrolyzer 102.

The second feedstock 108A is supplied to the second electrode 116. The second feedstock 108A comprises a light hydrocarbon species. In some embodiments, the light hydrocarbon species includes a hydrocarbon having a carbon number in the range of about C1 to about C7, about C1 to about C6 or, in some aspects, about C1 to about C4. For example, the light hydrocarbon species may include one or more of methane, ethane, propane, or butane. In some embodiments, the second feedstock 108A is a fossil-fuel based feedstock such as natural gas, flare gas, refining tail gas, etc. In some embodiments, the second feedstock 108A includes captured emissions, which may include emissions from industrial processes from the burning of fossil fuels. Flare gas and refining tail gas include examples of feedstocks comprising captured emissions. In some embodiments, the second feedstock 108A is a non-fossil fuel-based feedstock such as biogas, industrial waste gas, etc. Biogas comprises methane (CH₄) and carbon dioxide (CO₂) produced by the fermentation of organic matter. In some examples, industrial waste gas comprises carbon dioxide (CO₂), carbon monoxide (CO), and methane (CH₄). The industrial waste gas can include waste gas from chemical manufacturing, waste management, agriculture, food and beverage processing, cement production, petroleum refining, iron and steel production, and/or oil and gas processes. Flare gas may comprise a light hydrocarbon species and other gas derived from an oil or gas recovery process, a petrochemical process, or a landfill gas extraction process. In some examples, refining tail gas comprises hydrogen (H₂), methane (CH₄), carbon dioxide (CO₂), carbon monoxide (CO), and one or more other hydrocarbons (C₂H₆, C₃H₈, etc.).

In some embodiments, the second feedstock 108A is supplied by a second supply line 108 coupled to a second feedstock supply 138. The second feedstock 108A may be supplied to the solid oxide electrolyzer 102, for example, via piping. The second feedstock supply may be a storage tank that is hard piped to the solid oxide electrolyzer 102. The storage tank, for example, may be fed by a truck or by pipeline delivery. In some approaches, the piping for the second feedstock 108A may tie into piping from the syngas upgrading unit 104 to recycle tail gas from the syngas upgrading unit 104 into the second feedstock 108A. The second feedstock 108A is in the gas phase when it is fed the solid oxide electrolyzer 102. In some examples, the second feedstock 108A, including any hydrocarbon species, will be in the gas phase at room temperature. In some examples, the second feedstock 108A, including any hydrocarbon species, converts to the gas phase at elevated temperatures within the solid oxide electrolyzer 102, which may operate at temperatures higher than 500 degrees Celsius.

The first product stream 110A comprises hydrogen (H₂). The first product stream 110A may be used as a fuel or as a precursor in ammonia synthesis, the steel industry, sustainable aviation fuel (SAF) production, a refinery hydrotreating process, etc.

The second product stream 112A comprises syngas (CO + H₂). The second product stream 112A is fed to the syngas upgrading unit 104. Syngas upgrading typically occurs at higher pressures than solid oxide electrolysis, so, in some embodiments, the system 100 may further include a compressor for the second product stream 112A, for example, positioned downstream of the solid oxide electrolyzer 102 and upstream of the syngas upgrading unit 104, to feed the second product stream 112A upstream to the syngas upgrading unit 104.

The syngas upgrading unit 104 is downstream of the solid oxide electrolyzer 102 and is configured to accept at least one of the first product stream 110A and the second product stream 112A from the solid oxide electrolyzer 102. The first product steam 110A and/or the second product stream 112A may be supplied to the syngas upgrading unit 104 by a third supply line 112. The syngas upgrading unit 104 is configured to convert at least a portion of the second product stream 112A to another fuel and/or chemical. The syngas upgrading unit 104 can be any equipment suitable to perform a syngas upgrading process to convert syngas in the second product stream 112A to at least one secondary chemical. The at least one secondary chemical may be, for example, methanol, sustainable aviation fuel (SAF), diesel, wax, gasoline, light gases, water, ethanol, ethylene, propylene, liquid phase hydrocarbons having a carbon number of C6 or greater, Fischer Tropsch Syncrude, etc.

In one example, the syngas upgrading unit 104 includes equipment configured to perform a methanol synthesis process. For example, the syngas upgrading unit 104 includes a reactor such as a shell and tube isothermal fixed bed reactor or an adiabatic fixed bed reactor to convert syngas to methanol. A boiling water reactor may be one type of shell and tube design, with boiling water in the shell side controlling the reaction temperature of catalyst in the tube. Methanol synthesis reactors may have multiple reaction stages with quench and/or reactant recycle loops with recycle compressors to control the temperature of the exothermic reaction. Other equipment that may be incorporated in the syngas upgrading unit 104 to perform the methanol synthesis process can include a heat exchanger, compressors, distillation columns, etc. For example, downstream of the reactor, a heat exchanger may cool the products and condense methanol to a liquid. A separator may collect the liquid phase methanol from remaining gas phase reactants which can be recycled to the methanol synthesis reactor or recycled via the recycle line 124 to the solid oxide electrolysis step at the solid oxide electrolyzer 102. A distillation step may be used to separate the methanol from water.

In another example, the syngas upgrading unit 104 includes equipment configured to perform a Fischer-Tropsch process. In some examples, the syngas upgrading unit 104 includes one or more reactors such as fixed bed, fluidized bed, or slurry bed reactors to carry out the Fischer-Tropsch process to convert syngas to SAF, gasoline, diesel, wax, light gases, water, etc. Other equipment that may be incorporated into the syngas upgrading unit 104 to perform the Fischer-Tropsch process includes a reactor with catalyst, a heat exchanger, compressors, distillation columns, a condenser, etc.

In yet other examples, the syngas upgrading unit 104 may be configured to perform a higher alcohols or mixed alcohols synthesis to convert syngas into mixed alcohols (e.g., C1 to C4 alcohols) through catalytic conversion. Such a process may then convert the mixed alcohols to other chemicals and/or fuels. This process may be similar to the methanol synthesis process, but catalyst and process conditions may be optimized for other products, including ethanol, propanol, and butanol. In another example, the syngas upgrading unit 104 includes equipment configured to perform a fermentation to ethanol or other alcohols. This fermentation process may use a bioreactor with organisms to ferment the syngas to alcohols. A suitable organism to ferment the syngas to alcohols includes the Clostridium strain. In another example, the syngas upgrading unit 104 includes equipment configured to perform an electrochemical conversion of syngas to chemical intermediates, including alcohols or olefins.

In some embodiments, the system 100 includes a heat integration system 122 that is configured to utilize heat energy released from the syngas upgrading unit 104 in the solid oxide electrolyzer 102. Use of heat from the syngas upgrading unit 104 in the solid oxide electrolyzer 102 may increase the efficiency and reduces the electrical energy needed for the electrochemical reactions occurring in the solid oxide electrolyzer 102, thereby reducing electricity consumption of the solid oxide electrolyzer 102. In some approaches, the heat integration system 122 may include one or more heat exchangers to capture heat from the syngas upgrading unit 104 for steam generation into the operation of the solid oxide electrolyzer 102. In some examples, the heat integration can be accomplished with a feed/effluent heat exchanger to transfer heat from the product stream 130A to the first and second feedstocks 106A, 108A fed to the solid oxide electrolyzer 102. In particular, a shell and tube heat exchanger could be used to cool the product stream 130A and vaporize the water to steam in the first feedstock 106A. The heat integration could also be performed in the syngas upgrading unit 104, for example in a reactor of the syngas upgrading unit 104. In particular, a shell and tube reactor could transfer heat from the exothermic syngas upgrading reaction to the first feedstock 106A to convert water into steam for the solid oxide electrolyzer 102. A heat exchanger, such as boiling water reactor, that is part of the syngas upgrading unit 104 can also be used to heat the first feedstock 106A of the solid oxide electrolyzer 102. For example, the first feedstock 106A may be routed through a heat exchanger (e.g., a boiling water reactor) in the syngas upgrading unit 104 to recover heat from the syngas upgrading process to heat water in the first feedstock 106A to generate steam. Integrating heat from the syngas upgrading process may improve overall efficiency of the system 100 via heat integration.

In some embodiments, the system 100 includes a recycle line 124 configured to recycle tail gas from the syngas upgrading unit 104 into the second feedstock 108A. The tail gas may include, for example, unconverted light hydrocarbons from the syngas upgrading unit 104. The tail gas may also include one or more by-products from the syngas upgrading process (e.g., carbon dioxide, methane). The product stream 130A from the syngas upgrading unit 104 may include light hydrocarbon species, such as C1-C4 hydrocarbon species or C1-C6 hydrocarbon species, which may be considered less valuable products than the desired products, e.g. methanol, SAF, gasoline, diesel, wax, and etc. Such light hydrocarbon species (e.g., the "light fraction") of the product stream 130A can be recycled via the recycle line 124 to increase the yield of products, such as SAF. It is contemplated that recycling tail gas from the syngas upgrading unit 104 increases a yield of products from the syngas upgrading unit 104. In some configurations, the recycle line 124 is in fluid communication with the product stream 130A of the syngas upgrading unit 104 and the second feedstock 108A. The recycle line 124 may include a valve 126 for throttling the flow of gas from the product stream 130A into the second feedstock 108A.

In some embodiments, the system 100 includes a separation unit 125 for the product stream 130A of the syngas upgrading unit 104 for separating light hydrocarbon species (e.g., less valuable products), such as C1-C4 hydrocarbon species or C1-C6 hydrocarbon species from desired products (e.g., more valuable products), such as C7 or greater hydrocarbon species. The separation unit 125 is in fluid communication with the syngas upgrading unit 104 via a fourth supply line 130. The light hydrocarbon species 124A separated by the separation unit 125 may be provided to the solid oxide electrolyzer 102 via the recycle line 124. The products 140A separated by the separation unit 125 may be provided to storage (e.g., a storage tank) for use as a fuel or to additional processing units for further upgrading processes via a product output line 140. The separation unit 125 can be a distillation column or a gas/liquid separator.

In some embodiments, the system 100 includes a cross-over line 128 for blending the first product stream 110A into the second product stream 112A. The cross-over line 128 may include a valve 132 for adjusting or throttling the flow of the first product stream 110A into the second product stream 112A. In some examples, the cross-over line 128 is used to adjust a composition of the syngas (CO + H₂) in the second product stream. For example, since the first product stream 110A includes hydrogen (H₂), the valve 132 on the cross-over line 128 may be throttled to adjust a ratio of hydrogen to carbon monoxide (H₂:CO) in the second product stream 112A. The composition of syngas in the second product stream 112A may be influenced by the composition of the second feedstock 108A and operating conditions of the solid oxide electrolyzer 102; as a result the composition of syngas in the second product stream 112A may vary. Further, processes occurring within the syngas upgrading unit 104 may call for a particular ratio of hydrogen to carbon monoxide (H₂:CO), for example, to achieve a desired stoichiometric ratio, high conversion, and/or high production selectivity for reactions occurring within the syngas upgrading unit. Optimizing the ratio of hydrogen to carbon monoxide (H₂:CO) in the syngas may also improve or maximize a lifetime of the catalyst in the syngas upgrading unit 104. In some approaches, the first product stream 110A is blended into the second product stream 112A to achieve a target ratio of hydrogen to carbon monoxide (H₂:CO). In some examples, the target ratio of hydrogen to carbon monoxide (H₂:CO) is about 2.

Blending hydrogen (H₂) from the first product stream 110A to adjust a ratio of hydrogen to carbon monoxide (H₂:CO) in the second product stream 112A may help to optimize the downstream syngas upgrading processes occurring in the syngas upgrading unit 104. For example, the ratio of hydrogen to carbon monoxide (H₂:CO) in the second product stream 112A may be adjusted based on a target ratio called for in the downstream syngas upgrading process. In traditional chemical approaches for syngas production that use coal gasification and/or steam reforming, additional processes such as reverse water gas shift reactions are often used to adjust the ratio of hydrogen to carbon monoxide (H₂:CO) in syngas. For example, extensive water gas shift reactions may be used to refine the ratio of hydrogen to carbon monoxide (H₂:CO) in syngas to meet the stoichiometric ratio needed for full conversion of syngas to methanol. Such additional processes often require high capital expenditure on equipment to achieve target ratios. By contrast, the system 100 includes simple and cost-effective means (e.g., cross-over line 128) for blending the first and second product streams 110A, 112A from the solid oxide electrolyzer 102 to refine the ratio of hydrogen to carbon monoxide (H₂:CO) in syngas and achieve desired stoichiometric ratios for downstream syngas upgrading processes.

In operation, the first feedstock 106A is supplied to the first electrode 114. The second feedstock is supplied to the second electrode 116. Electrical energy is provided to the solid oxide electrolyzer 102 via the electricity source 120 to apply a voltage between the first electrode 114 and the second electrode 116. When a voltage is applied, an electrical current flows through the solid oxide electrolyzer 102. The electrical current drives electrochemical reactions in the first electrode 114 and the second electrode 116.

In the first electrode 114, steam in the first feedstock 106A reacts to produce hydrogen (H₂) and oxygen ions (O²⁻). Oxygen ions (O²⁻) are transported through the electrolyte 118 to the second electrode 116. The hydrogen (H₂) exits the first electrode 114 in the first product stream 110A. The hydrogen (H₂) in the first product stream 110A can be used as a fuel, or used as input for ammonia synthesis, SAF production, the steel industry, or refinery hydrotreating processes. The hydrogen (H₂) in the first product stream 110A can also be blended into the second product stream 112A via the cross-over line 128 to adjust a ratio of hydrogen to carbon monoxide (H₂:CO) in the syngas in the second product stream 112A. Such an adjustment may improve or optimize the ratio of hydrogen to carbon monoxide (H₂:CO), for example, to achieve a desired stoichiometric ratio for the syngas upgrading process (e.g., methanol synthesis, Fischer-Tropsch process) carried out in the syngas upgrading unit 104.

In the second electrode 116, the light hydrocarbon species in the second feedstock 108A reacts with the oxygen ions (O²⁻) transported from the first electrode 114 to produce syngas (CO + H₂). The reaction of the light hydrocarbon species with oxygen ions (O²⁻) reduces or eliminates the potential difference across the solid oxide electrolyzer 102. The reduction or elimination of the potential difference across the solid oxide electrolyzer 102 improves electrolyzer current, which improves performance, and also reduces electricity consumption of the solid oxide electrolyzer 102.

Syngas (CO + H₂) exits the second electrode 116 in the second product stream 112A and is fed to the syngas upgrading unit 104. The syngas upgrading unit 104 converts the syngas to one or more secondary chemicals. In one example, the syngas upgrading unit 104 converts the syngas to methanol via a methanol synthesis process. In another example, the syngas upgrading process converts the syngas to hydrocarbons of various molecular weights via a Fischer-Tropsch process.

In some embodiments, tail gas from the syngas upgrading unit 104 is recycled through the recycle line 124 into the second feedstock 108A. Because the tail gas includes unconverted hydrocarbons from the upgrading process of the syngas upgrading unit 104, such recycle can be performed to improve the carbon yield of the reactions occurring in the second electrode 116. Carbon yield, as used herein, defines a ratio of carbon in the product stream 130A (e.g., after the separation unit 125) to carbon input into the second electrode 116 (e.g., via the second feedstock 108A). The tail gas from the syngas upgrading unit 104 may contain unconverted hydrocarbons and light hydrocarbons (e.g., which may be by-products from the syngas upgrading process). A low carbon yield may mean low utilization of the hydrocarbon species in the second feedstock 108A, which may increase the cost of operation. As such, improvements to carbon yield show improved utilization of the hydrocarbon species in the second feedstock 108A, which may decrease the cost of operation.

In some embodiments, a heat exchanger 134 is used to capture heat from the first product stream 110A and/or the second product stream 112A to preheat the first feedstock 106A and/or the second feedstock 108A.

FIG. 2 shows exemplary reactions that can occur within the solid oxide electrolyzer 102 to convert the first and second feedstocks 106A, 108A to the first and second product streams 110A, 112A, in accordance with one embodiment. In the embodiment shown in FIG. 2, the second feedstock 108A is biogas.

The first electrode 114 receives the first feedstock 106A, which comprises water (H₂O) in the form of steam and, optionally, carbon dioxide (CO₂). The application of electrical energy to the solid oxide electrolyzer 102 causes the water (H₂O) to split to form hydrogen (H₂) and oxygen ions (O²⁻). When the first feedstock further includes carbon dioxide (CO₂), the application of electrical energy also initiates the electrochemical conversion of carbon dioxide (CO₂) to carbon monoxide (CO) and oxygen ions (O²⁻). Oxygen ions (O²⁻) are transported through the electrolyte 118 to the second electrode 116. Hydrogen (H₂) and, optionally, carbon monoxide (CO) exit the first electrode via the first product stream 110A.

The second electrode 116 receives the second feedstock 108A, which comprises biogas (CH₄ + CO₂). The application of electrical energy to the solid oxide electrolyzer 102 initiates the chemical conversion of methane (CH₄) and carbon dioxide (CO₂) to syngas (CO + H₂). Methane (CH₄) in the biogas also reacts with the oxygen ions (O²⁻) transferred from the first electrode 114 to form syngas (CO + H₂). The reaction of methane (CH₄) with oxygen ions (O²⁻) also reduces the potential across the solid oxide electrolyzer. Syngas (CO + H₂) exits the second electrode 116 via the second product stream 112A.

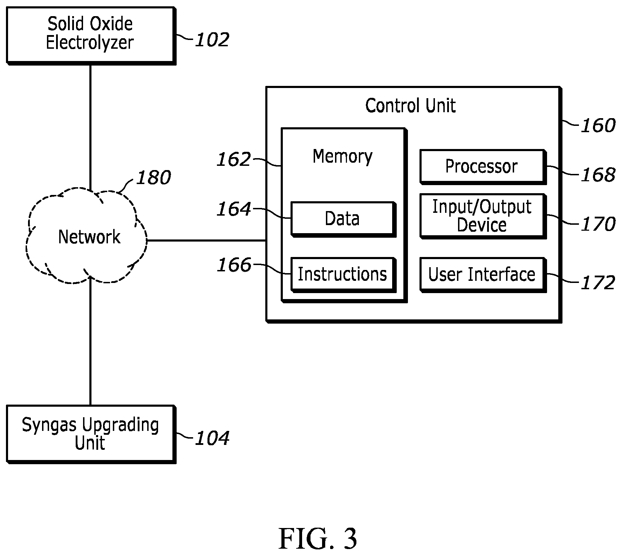

FIG. 3 shows the solid oxide electrolyzer 102 and the syngas upgrading unit 104 or portions thereof in operative communication with a control unit 160, in accordance with some embodiments. The control unit 160 may be configured to operate the solid oxide electrolyzer 102, the syngas upgrading unit 104, and/or portions thereof. It is contemplated that the control unit 160 can be configured to carry out one or more of the operations of the solid oxide electrolyzer 102 and/or the syngas upgrading unit 104 that are described herein.

The control unit 160 typically comprises one or more processors 168 and/or microprocessors. The memory 162 stores the operational code or set of instructions 166 that is executed by the control unit 160 and/or the one or more processors 168 to implement the functionality of the solid oxide electrolyzer 102, the syngas upgrading unit 104, or portions thereof. In some embodiments, the memory 162 may also store some or all of the data 164 associated with operation of the solid oxide electrolyzer 102 and/or the syngas upgrading unit 104.

The control unit 160 may be implemented as one or more processors 168. Similarly, the memory 162 may be implemented as one or more memory devices such as one or more processor readable and/or computer-readable media, and can include volatile and/or nonvolatile media such as RAM, ROM, EEPROM, flash memory and/or other memory technology. Further, the memory 162 is shown as internal to the control unit 160; however, the memory 162 can be internal, external or a combination of internal and external memory. Additionally, the control unit 160 typically includes a power supply (not shown), which may be rechargeable, and/or may receive power from an external source.

The user interface 172 may be used to control one or more components of the system 100. The user interface 172 may be used for user input and/or output display. For example, the user interface 172 may include any known input/output (I/O) devices 170, such as one or more buttons, knobs, selectors, switches, keys, touch input surfaces, audio input, and/or displays, etc. Additionally, the user interface 172 may include one or more output display devices, such as lights, visual indicators, display screens, etc., to convey information to a user, such as but not limited to communication information, status information, order information, delivery information, notifications, errors, conditions, and/or other such information. Similarly, the user interface 172 in some embodiments may include audio systems that can receive audio commands or requests verbally issued by a user, and/or output audio content, alerts, and the like.

The control unit 160 can be configured to perform various operations of the solid oxide electrolyzer 102 and/or the syngas upgrading unit 104.

In some embodiments, the control unit 160 is configured to operate the heat integration system 122 to transfer heat energy released from the syngas upgrading unit 104 to the solid oxide electrolyzer 102. Transferring heat in this manner can reduce electricity consumption of the solid oxide electrolyzer 102, thereby improving the energy efficiency of the solid oxide electrolyzer 102.

In some embodiments, the control unit 160 is configured to adjust an amount of the first product stream 110A that is blended with the second product stream 112A to adjust a composition of the syngas in the second product stream 112A. For example, the control unit 160 may adjust a flow rate through the cross-over line 128. It is contemplated that such a flow adjustment can be achieved in any suitable manner, such as via one or more valves 132 present on the cross-over line 128.

In some embodiments, the control unit 160 is configured to control operation of the solid oxide electrolyzer 102 to adjust a ratio of hydrogen to carbon monoxide (H₂:CO) of the syngas in the second product stream 112A. The control unit 160 may be configured to adjust one or more operational parameters of the solid oxide electrolyzer including, for example, operating temperature, flow rate of the first feedstock 106A, flow rate of the second feedstock 108A, and electrolyzer current. In one example, the control unit 160 is configured to vary an amount of electrical energy applied to the solid oxide electrolyzer by the electricity source 120 based on at least one of a composition or a feed rate of the second feedstock 108A. The amount of the hydrocarbon species supplied to the solid oxide electrolyzer 102 is influenced by the composition and/or flow rate of the second feedstock 108A. In some approaches, the system 100 may include one or more sensors or gas analyzers in electrical communication with the control unit 160 for sensing the composition or a feed rate of the second feedstock 108A. Changes of the hydrocarbon species input can influence the capacity for reaction with oxygen (O₂) in the solid oxide electrolyzer 102 to produce syngas. The amount of oxygen (O₂) in the solid oxide electrolyzer 102 can be controlled, for example, by adjusting the operating current. Decreasing the operating current may decrease the amount of oxygen to accommodate a lower amount of hydrocarbon species input to the solid oxide electrolyzer 102. Similarly, increasing the operating current may increase the amount of oxygen to accommodate a larger amount of hydrocarbon species input to the solid oxide electrolyzer 102.

In some embodiments, the control unit 160 is configured to adjust or control the recycling of tail gas from the syngas upgrading unit 104 to the second feedstock 108A. For example, the control unit 160 may adjust a flow rate through the recycle line 124 to adjust the recycle of tail gas from the syngas upgrading unit 104 to the second feedstock 108A. It is contemplated that such a flow adjustment can be achieved in any suitable manner, such as via one or more valves 126 present on the recycle line 124. Recycling tail gas from the syngas upgrading unit 104 may improve carbon yield and conversion of hydrocarbons in the solid oxide electrolyzer. The light hydrocarbon fraction 124A of the tail gas recycled back to the second feedstock 108A increases the overall utilization of hydrocarbon species and yield of desired products, such as SAF.

In some embodiments, when the first feedstock 106A includes carbon dioxide (CO₂) in addition to steam, the control unit 160 is configured to adjust the flow rates of both steam and CO2, and the ratio of steam to carbon dioxide (CO₂) in the first feedstock 106A. It is contemplated that the adjustment of the ratio of steam present can be achieved in any suitable manner, such as one or more valves present on the first feedstock line 106. Adjusting the ratio of steam to carbon dioxide (CO₂) in the first feedstock 106A may adjust a ratio of hydrogen (H₂) to carbon monoxide (CO) in the first product stream 110A.

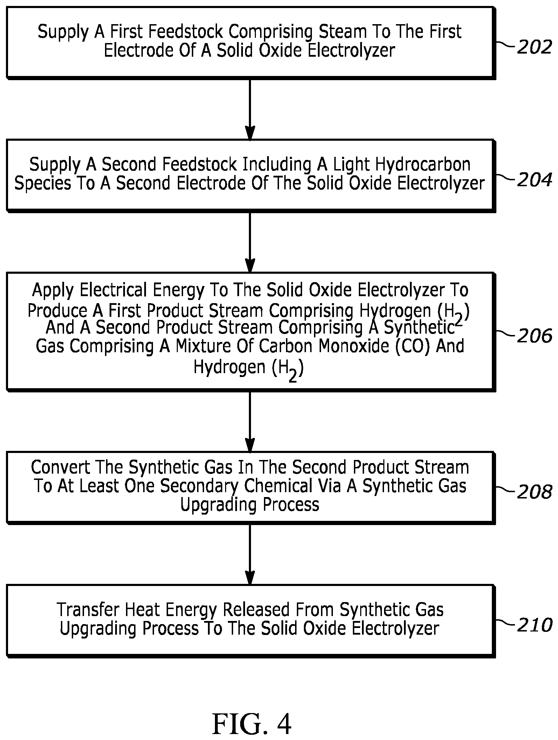

FIG. 4 shows an exemplary method for producing and upgrading syngas. The method uses a solid oxide electrolyzer to convert steam and a hydrocarbon-based feedstock to syngas and hydrogen (H₂). The method also includes a syngas upgrading process that converts the syngas to at least one secondary chemical. Advantageously, the method involves the dynamic and integrated operation of the syngas upgrading process in conjunction with syngas production at the solid oxide electrolyzer. For example, heat or tail gas from the syngas upgrading process may be used in the solid oxide electrolyzer to improve efficiency or conversion of syngas production.

In some embodiments, the solid oxide electrolyzer is the solid oxide electrolyzer 102 described with reference to FIG. 1 and the syngas upgrading process is performed by the syngas upgrading unit described with reference to FIG. 1.

At block 202, a first feedstock is supplied to a first electrode of a solid oxide electrolyzer. In some examples, the first feedstock is the first feedstock 106A described with reference to FIG. 1. The first feedstock comprises steam (H₂O) and, optionally, carbon dioxide (CO₂). In some embodiments, the first electrode is a cathode of the solid oxide electrolyzer.

At block 204, a second feedstock is supplied to a second electrode of the solid oxide electrolyzer. The hydrocarbon-based feedstock may be non-fossil fuel based and/or may be renewably sourced. In some examples, the second feedstock is the second feedstock 108A described with reference to FIG. 1. In some embodiments, the second electrode is an anode of the solid oxide electrolyzer.

At block 206, electrical energy is applied to the solid oxide electrolyzer to produce a first product stream comprising hydrogen (H₂) and a second product stream comprising syngas (CO + H₂). When carbon dioxide (CO₂) is also present in the first feedstock, the first feedstock reacts in the first electrode to produce carbon monoxide (CO) and oxygen ions (O²⁻). In some examples, the first product stream is the first product stream 110A and the second product stream is the second product stream 112A described with reference to FIG. 1.

In some embodiments, the electrical energy applied to the solid oxide electrolyzer includes energy from a renewable electricity source.

At block 208, syngas in the second product stream is converted to at least one secondary chemical via a downstream syngas upgrading process. The syngas upgrading process may be, for example, a methanol synthesis process or a Fischer-Tropsch process. The syngas upgrading process is carried out by the syngas upgrading unit 104 described with reference to FIG. 1.

At block 210, heat energy released from the syngas upgrading process is transferred to the solid oxide electrolyzer. Transferring heat energy from the syngas upgrading process to the solid oxide electrolyzer may improve the energy efficiency of the solid oxide electrolyzer. In some examples, the heat integration system 122 described with reference to FIG. 1 is used to transfer heat energy from the syngas upgrading process to the solid oxide electrolyzer.

In some embodiments, the method further includes adjusting or controlling the recycling of tail gas from the syngas upgrading process to the second feedstock of the solid oxide electrolyzer. Recycling tail gas from the syngas upgrading process may improve carbon yield and conversion of hydrocarbons in the solid oxide electrolyzer. The method further includes passing the tail gas from the syngas upgrading process through a separator to separate the light hydrocarbon fraction of the tail gas. The light hydrocarbon fraction of the tail gas is recycled, via a recycling line, back to the second feedstock which may increase the overall utilization of hydrocarbon species.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further, it will be understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Further aspects of the disclosure are provided by the subject matter of the following clauses:
A method for syngas production and upgrading via a solid oxide electrolyzer having a first electrode and a second electrode disposed on opposite sides of an electrolyte, the method comprising: supplying a first feedstock comprising steam to the first electrode; supplying a second feedstock comprising a light hydrocarbon species to the second electrode; applying electrical energy to the solid oxide electrolyzer to produce a first product stream comprising hydrogen (H2) and a second product stream comprising syngas, the syngas comprising a mixture of carbon monoxide (CO) and hydrogen (H2); converting the syngas in the second product stream to at least one secondary chemical via a syngas upgrading process; and transferring heat energy released from syngas upgrading process to the solid oxide electrolyzer.

The method of any preceding clause, wherein the second feedstock includes a non-fossil fuel-based feedstock.

The method of any preceding clause, wherein the non-fossil fuel-based feedstock includes at least one of biogas or industrial waste gas.

The method of any preceding clause, wherein the light hydrocarbon species has a carbon number in a range of about C1 to about C7.

The method of any preceding clause, wherein the syngas upgrading process includes at least one of a methanol synthesis process, a Fischer-Tropsch (FT) process, an alcohol synthesis process, a fermentation process, or an electrochemical synthesis process.

The method of any preceding clause, further comprising: blending a portion of the first product stream with the second product stream to adjust a composition of the syngas in the second product stream.

The method of any preceding clause, further comprising: varying an amount of electrical energy applied to the solid oxide electrolyzer based on at least one of a composition or a feed rate of the second feedstock.

The method of any preceding clause, further comprising: recycling tail gas from the syngas upgrading process to improve a carbon yield in syngas upgrading products, the tail gas comprising unconverted light hydrocarbons and light hydrocarbons produced as a byproduct of the syngas upgrading process.

The method of any preceding clause, wherein the first feedstock stream further comprises carbon dioxide (CO2) and produces carbon monoxide (CO) in the first product stream and oxygen ions formed in the second electrode during operation of the solid oxide electrolyzer.

The method of any preceding clause, further comprising: adjusting a ratio of steam to carbon dioxide (CO2) in the first feedstock to adjust ratio of hydrogen (H2) to carbon monoxide (CO) in the first product stream.

The method of any preceding clause, further comprising: varying an amount of electrical energy applied to the solid oxide electrolyzer based on at least one of a composition or a feed rate of the second feedstock.

A system for syngas production and upgrading, the system comprising: a solid oxide electrolyzer comprising: an electrolyte; a first electrode disposed on a first side of the electrolyte, the first electrode to receive a first feedstock including at least one of steam or carbon dioxide; a second electrode disposed on a second side of the electrolyte, the second electrode to receive a second feedstock including a hydrocarbon species; and an electrical energy source coupled to the first electrode and the second electrode to apply a current to apply a voltage between the first electrode and the second electrode to convert the first feedstock to a first product stream comprising at least one of hydrogen (H2) or carbon monoxide (CO) at the first electrode and to convert the second feedstock to a second product stream comprising syngas (CO + H2) at the second electrode; and a control unit in communication with the solid oxide electrolyzer, the control unit configured to adjust an amount of the first product stream blended with the second product stream to adjust a composition of the syngas in the second product stream.

The system of any preceding clause, further comprising: a syngas upgrading unit that receives at least a portion of the syngas from the solid oxide electrolyzer and upgrades the syngas to a secondary chemical, the syngas upgrading unit in operative communication with the control unit.

The system of any preceding clause, further comprising: a heat integration system configured to transfer heat energy released from the syngas upgrading unit.

The system of any preceding clause, wherein the control unit is further configured to operate the heat integration system to control an amount heat transferred from the syngas upgrading unit to the solid oxide electrolyzer.

The system of any preceding clause, wherein the control unit is further configured to recycle tail gas from the syngas upgrading unit and blend the tail gas into the second feedstock to improve carbon yield.

The system of any preceding clause, wherein the control unit is further configured to adjust a ratio of steam to carbon dioxide (CO2) in the first feedstock.

The system of any preceding clause, wherein the second electrode includes a catalyst to promote partial oxidation of hydrocarbon species in the second feedstock to form carbon monoxide (CO) and hydrogen (H2).

The system of any preceding clause, wherein the control unit is further configured to vary an amount of electrical energy applied to the solid oxide electrolyzer by the electrical energy source based on at least one of a composition or a feed rate of the second feedstock.

The system of any preceding clause, wherein the second electrode is composed of a mixed ionic-electronic conductor.

## Claims

1. A method for syngas production and upgrading via a solid oxide electrolyzer (102) having a first electrode (114) and a second electrode (116) disposed on opposite sides of an electrolyte (118), the method comprising:
supplying a first feedstock (106A) comprising steam to the first electrode (114);
supplying a second feedstock (108A) comprising a light hydrocarbon species to the second electrode (116);
applying electrical energy to the solid oxide electrolyzer (102) to produce a first product stream (110A) comprising hydrogen (H2) and a second product stream (112A) comprising syngas, the syngas comprising a mixture of carbon monoxide (CO) and hydrogen (H₂);
converting the syngas in the second product stream (112A) to at least one secondary chemical via a syngas upgrading process; and
transferring heat energy released from syngas upgrading process to the solid oxide electrolyzer (102).

2. The method of claim 1, wherein the second feedstock (108A) includes a non-fossil fuel-based feedstock.

3. The method of claim 2, wherein the non-fossil fuel-based feedstock includes one or more of a biogas or an industrial waste gas.

4. The method of any preceding claim, wherein the light hydrocarbon species has a carbon number in a range of about C1 to about C7.

5. The method of any preceding claim, wherein the syngas upgrading process includes one or more processes including a methanol synthesis process, a Fischer-Tropsch (FT) process, an alcohol synthesis process, a fermentation process, an electrochemical synthesis process.

6. The method of any preceding claim, further comprising:
blending a portion of the first product stream (110A) with the second product stream (112A) to adjust a composition of the syngas in the second product stream (112A).

7. The method of any preceding claim, further comprising:
varying an amount of electrical energy applied to the solid oxide electrolyzer (102) based on at least one of a composition or a feed rate of the second feedstock (108A).

8. The method of any preceding claim, further comprising:
recycling tail gas from the syngas upgrading process to improve a carbon yield in the second product stream (112A), the tail gas comprising unconverted light hydrocarbons and light hydrocarbons produced as a byproduct of the syngas upgrading process.

9. The method of preceding claim, wherein the first feedstock stream (106A) further comprises carbon dioxide (CO₂) and produces carbon monoxide (CO) in the first product stream (110A) and oxygen ions formed in the second electrode (116) during operation of the solid oxide electrolyzer (102).

10. The method of claim 9, further comprising:
adjusting a ratio of steam to carbon dioxide (CO₂) in the first feedstock (106A) to adjust ratio of hydrogen (H₂) to carbon monoxide (CO) in the first product stream (110A).

11. The method of any preceding claim, further comprising:
varying an amount of electrical energy applied to the solid oxide electrolyzer (102) based on at least one of a composition or a feed rate of the second feedstock (108A).

12. A system (100) for syngas production and upgrading, the system (100) comprising:
a solid oxide electrolyzer (102) comprising:
an electrolyte (118);
a first electrode (114) disposed on a first side (103) of the electrolyte (118), the first electrode (114) to receive a first feedstock (106A) from a first feedstock source line (106), the first feedstock (106A) including at least one of steam or carbon dioxide;
a second electrode (116) disposed on a second side (105) of the electrolyte (118), the second electrode (116) to receive a second feedstock (108A) from a second feedstock source line (108), the second feedstock (108A) including a hydrocarbon species; and
an electrical energy source (120) coupled to the first electrode (114) and the second electrode (116) to apply a current to apply a voltage between the first electrode (114) and the second electrode (116) to convert the first feedstock (106A) to a first product stream (110A) comprising at least one of hydrogen (H₂) or carbon monoxide (CO) at the first electrode (114) and to convert the second feedstock (108A) to a second product stream (112A) comprising syngas (CO + H₂) at the second electrode (116); and
a control unit (160) in communication with the solid oxide electrolyzer (102), the control unit (160) configured to adjust an amount of the first product stream (110A) blended with the second product stream (112A) to adjust a composition of the syngas in the second product stream (112A).

13. The system (100) of claim 12, further comprising:
a syngas upgrading unit (104) that receives at least a portion of the syngas from the solid oxide electrolyzer (102) and upgrades the syngas to a secondary chemical, the syngas upgrading unit (104) in operative communication with the control unit (160).

14. The system (100) of claim 13, further comprising:
a heat integration system (122) configured to transfer heat energy released from the syngas upgrading unit (104).

15. The system (100) of claim 14, wherein the control unit (160) is further configured to operate the heat integration system (122) to control an amount heat transferred from the syngas upgrading unit (104) to the solid oxide electrolyzer (102).
